# EUROPÄISCHE PATENTSCHRIFT

(11) **EP 1 069 367 B1**
(45) Veröffentlichungstag und Bekanntmachung des Hinweises auf die Patenterteilung: **17.08.2011**
(21) Anmeldenummer: 00108580.2
(22) Anmeldetag: 20.04.2000
(51) Int. Cl.: F16L 47/00

(54) **Rohranbohrarmatur**
Tapping fitting for pipes
Appareil de perçage pour tuyaux

(30) Priorität: 14.07.1999 DE 19932401
(43) Veröffentlichungstag der Anmeldung: 17.01.2001
(73) Patentinhaber: Georg Fischer Wavin AG, 8200 Schaffhausen (CH)
(72) Erfinder: Lehman, Ernesto, 8200 Schaffhausen (CH); Müller, Reinhard, 78224 Singen (DE); Schwarz, Bernd, 78224 Singen (DE)
(74) Vertreter: De Colle, Piergiacomo

(56) Entgegenhaltungen:
- EP-A- 0 811 799
- DE-A- 19 543 681
- US-A- 3 349 792

## Beschreibung

Die Erfindung bezieht sich auf eine Rohranbohrarmatur für ein medienförderndes Rohr, umfassend ein Gehäuse, das einen unter einem Winkel zur Rohrachse anbringbaren Bohrstutzen zum Anbohren der Rohrwand und einen unter einem Winkel zum Bohrstutzen angeordneten Abzweigstutzen aufweist, wobei im Bohrstutzen eine drehbetätigbare Schneidbüchse mit einem Schneidbereich, einem Gewindebereich komplementär zum Gewinde des Bohrstutzens und einem Dichtungsbereich zwischen Bohrstutzen und Schneidbüchse mit mindestens einem Dichtungsmittel zur Abdichtung des medienfördernden Rohres gegen Aussen angeordnet ist, wobei das Dichtungsmittel radial nach innen beabstandet von den komplementären Gewinden angeordnet ist, vgl. Oberbegriff des Anspruchs 1 bekannt aus der EP-A-811799.

Aus der DE 196 30 029 A1 ist eine Rohranbohrarmatur bekannt, wobei die Schneidbüchse sowohl eine Schneidfunktion als auch eine Dichtfunktion hat. Die Dichtfunktion wird erreicht durch elastische Dichtringe, die in Radialnuten auf der Aussenseite der Schneidbüchse im Bereich eines Aussengewindeganges angeordnet sind und einem komplementären Innengewindegang des Bohrstutzens entlang gleiten. Der Innengewindegang erstreckt sich über eine Länge, die ein Vielfaches länger ist als die Dicke des Dichtringes. Auf dieser Länge kann der elastische Dichtring vom Innengewinde bei einem wiederholten Ein- und Ausschrauben leicht angeschnitten und beschädigt werden. Die grosse Länge führt auch zu einer grossen Bauhöhe.

Aus der US 3 349 792 ist eine weitere Rohranbohrarmatur mit einem Ventil bekannt. Die Armatur umfasst ein Gehäuse mit einem Bohrstutzen und einem Abzweigstutzen. In dem Bohrstutzen ist eine hohle zylindrische Vorrichtung mit im unteren Teil einer Schneidkante und einem Aussengewinde und im oberen Teil einem Innengewinde. Die Schneidkante dient zum Durchtrennen der Rohrwand. Das Aussengewinde dient zur Abdichtung und zur Befestigung der Rohranbohrarmatur in der Rohrleitung. Mit dem Innengewinde wirkt ein Ventilkörper zusammen, der am unteren Ende eine Schraube zum Festhalten des Rohrwandausschnittes dient. Der Ventilkörper weist gegenüber dem Bohrstutzen eine Dichtung auf. Der Ventilkörper und die zylindrische Schneidvorrichtung können nach oben aus dem Gehäuse ausgeschraubt werden.

Ausgehend vom Stand der Technik nach EP-A-811799 ist es Aufgabe der Erfindung, eine Rohranbohrarmatur anzugeben, die möglichst einfach und kompakt aufgebaut ist und in allen Phasen der Anwendung eine möglichst gute Dichtfunktion hat.

Diese Aufgabe wird gelöst durch eine Rohranbohrarmatur mit den Merkmalen des Patentanspruchs 1.

Bevorzugte Weiterbildungen der Erfindung ergeben sich aus den abhängigen Patentansprüchen.

Es ist von Vorteil, dass die Rohranbohrarmatur einen möglichst hohen Druck des Fördermittels aushalten kann. Dies wird dadurch erreicht, dass das Dichtungsmittel zwischen Bohrstutzen und Schneidbüchse radial nach innen und beabstandet von den komplementären Gewinden angeordnet ist. Die Kraft, die auf das elastische Dichtungsmittel wirkt, nimmt zu mit dem Durchmesser des Dichtungsmittels.

Es ist auch von Vorteil, dass die Rohranbohrarmatur möglichst einfach hergestellt werden kann. Dies wird dadurch erreicht, dass das Dichtungsmittel zwischen dem Bohrstutzen des Gehäuses und der Schneidbüchse in einem einförmigen und vom Gewinde beabstandeten Dichtungsbereich der Schneidbüchse angeordnet ist. Durch die Zuordnung der Funktionen Schneiden, Dichten, Befestigen und Antreiben zu räumlich getrennten Bereichen wird erreicht, dass die Dimensionierung der Schneidbüchse optimal auf der jeweiligen Funktion der unterschiedlichen Bereiche ausgerichtet werden kann.

Ausführungsbeispiele der Erfindung werden anhand der Figuren beschrieben. Es zeigen:
Figur 1 einen Schnitt durch eine Rohranbohrarmatur vor dem Anbohren eines medienfördernden Rohres, die nicht Teil der Erfindung ist,
Figur 2 einen Schnitt durch die Rohranbohrarmatur aus Figur 1, im Zustand nach dem Anbohren des medienfördernden Rohres,
Figur 3 einen Schnitt durch eine erfindungsgemässe Rohranbohrarmatur vor dem Anbohren eines medienfördernden Rohres,
Figur 4 einen Schnitt durch die Rohranbohrarmatur aus Figur 3, im Zustand nach dem Anbohren des medienfördernden Rohres,
Figur 5 einen Schnitt durch die Schneidbüchse der Rohranbohrarmatur aus Fig 3 und 4 und
Figur 6 einen Schnitt durch eine weitere erfindungsgemäße Rohranbohrarmatur, die mit einem medienfördernden Rohr verbunden ist.

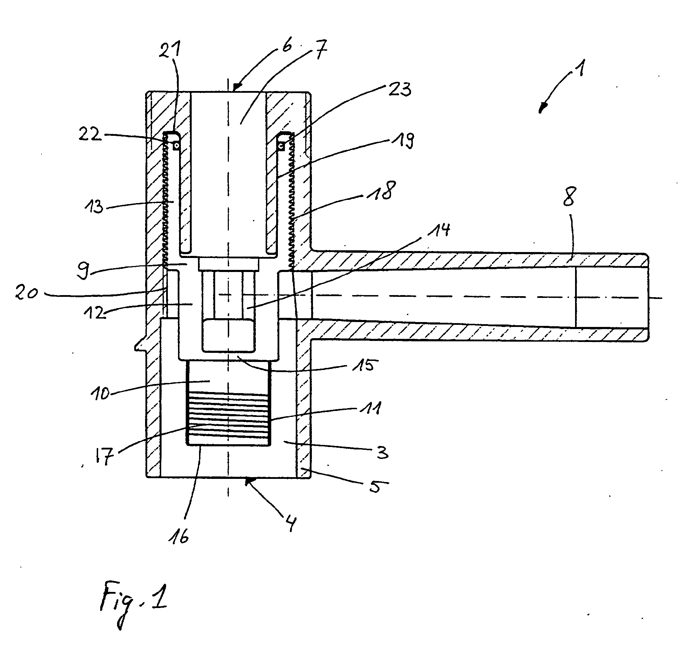

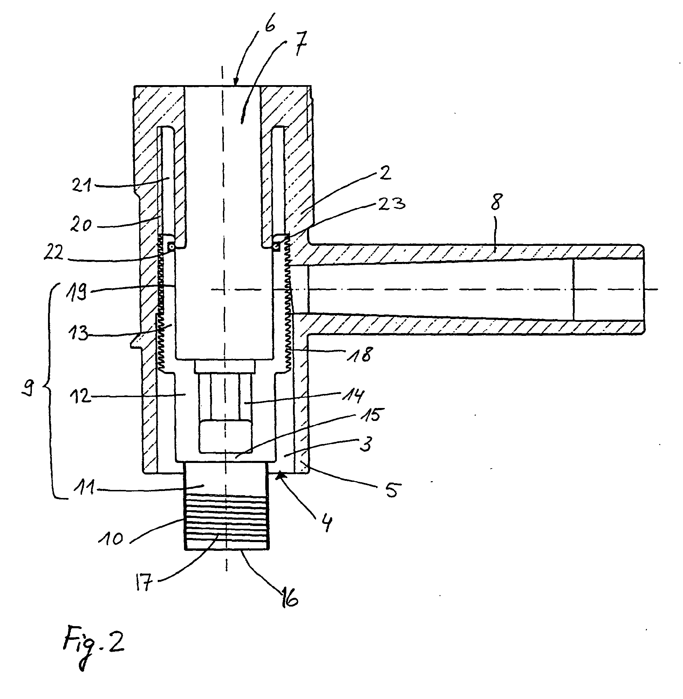

In Figur 1 ist, als Beispiel zum Stand der Technik, eine Rohranbohrarmatur 1 halbgeschnitten dargestellt. Die Beispiele von Figuren 1 und 2 sind nicht Teil der Erfindung. Die Rohranbohrarmatur 1 ist im Wesentlichen eine Rohrleitungsarmatur mit drei Ausgängen und mit Einbauten. Die Rohranbohrarmatur 1 umfasst ein Gehäuse 2, das einen Bohrstutzen 3 aufweist, der senkrecht zur Rohrachse eines medienfördernden Rohres angebracht werden kann. Das medienfördernde Rohr ist hier nicht dargestellt und kann Gas, Wasser oder ein anderes Medium fördern. Die Rohranbohrarmatur 1 dient dazu, eine abzweigende Rohrleitung, beispielsweise eine Anschlussleitung für ein Haus von einer Hauptleitung, beispielsweise eine Versorgungsleitung in dem Strassenuntergrund abzuzweigen. Mit der Rohranbohrarmatur 1 kann der Anschlussvorgang ohne Unterbrechung der Förderung des Mediums, dass in der Hauptleitung gefördert wird und ohne einen Verlust des Mediums durchgeführt werden. Vor allem bei Gas- oder Chemikalienförderleitungen ist es aus Gründen des Umweltschutzes wichtig, möglichst ohne Verlust des Mediums arbeiten zu können.

Der Bohrstutzen 3 weist an einem unteren Ende 4 einen Verbindungsbereich 5 auf, mit dem der Bohrstutzen 3 mit dem nicht dargestellten Rohr verbunden werden kann. Die Verbindung des Bohrstutzens 3 mit dem Rohr kann beispielsweise mit einer Rohrschelle, bei Kunststoffrohren mit einem elektroschweissbaren Sattelteil oder mit einem anderen bekannten Verbindungsverfahren hergestellt werden. Am oberen Ende 6 des Bohrstutzens 3 ist eine Bedienungsöffnung 7 dargestellt. Die Bedienungsöffnung 7 dient als Zugang für ein Werkzeug, das für den Anschlussvorgang der Rohranbohrarmatur 1 an die Hauptleitung in den Bohrstutzen 3 eingeführt werden muss.

Unter einem Winkel zum Bohrstutzen 3 ist ein Abzweigstutzen 8 angeordnet. In Figur 1 ist der Abzweigstutzen 8 etwa rechtwinklig zu dem Bohrstutzen 3 angeordnet. Es sind jedoch auch, je nach den Bedingungen am Einbauort, Winkel grösser oder kleiner als 90° denkbar. Hiermit wird erreicht, dass die Anschlussleitung, die mit dem Abzweigstutzen 8 verbunden werden muss, möglichst ohne Umleitung an der Hauptleitung angeschlossen werden kann. Die Anschlussleitung, die hier ebenfalls nicht dargestellt wurde, kann mit den gleichen Verbindungsverfahren wie oben beschrieben mit dem Abzweigstutzen 8 verbunden werden. In Figur 1 ist die Rohranbohrarmatur 1 in einem Zustand dargestellt, wie die Armatur zum Einbau vorbereitet auf der Baustelle angeliefert wird.

Als Einbau im Bohrstutzen 3 ist eine Schneidbüchse 9 dargestellt. Die Schneidbüchse 9 ist im Wesentlichen ein zylindrisches Bauteil, das konzentrisch in dem Bohrstutzen 3 angeordnet ist. Die Schneidbüchse 9 umfasst von unten nach oben vier Bereiche: einen Schneidbereich 10, der als einen Kernbohrer oder eine Schneidhülse 11 ausgebildet ist, einen Antriebsbereich 12, in der ein Werkzeug zur Betätigung der Schneidbüchse 9 aufgenommen werden kann, einen Gewindebereich 13, mit der die Schneidbüchse 9 axial und radial in dem Bohrstutzen 3 bewegbar ist und einen räumlich vom Gewindebereich 13 getrennten Dichtungsbereich 19, der die Schneidbüchse 9 zum Bohrstutzen 3 des Gehäuses 2 abdichtet.

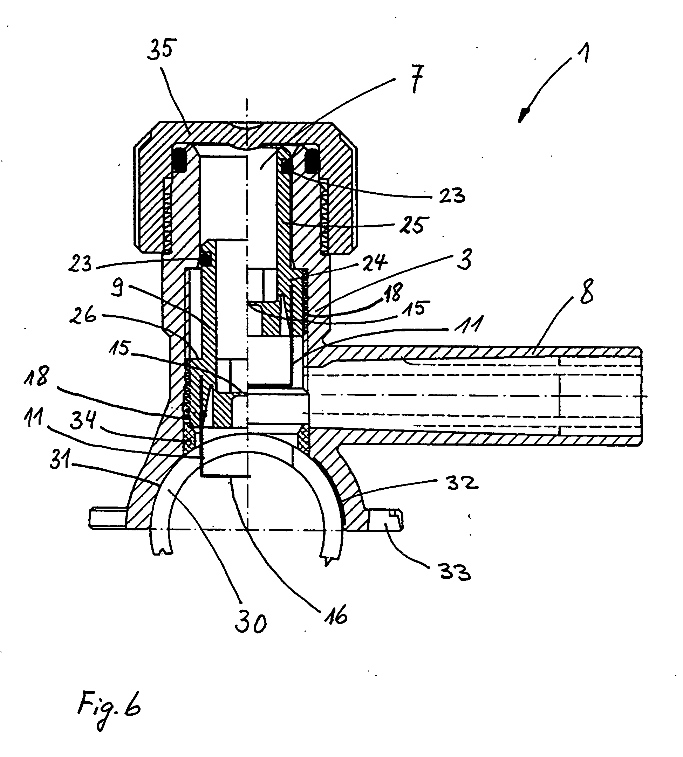

Der Antriebsbereich 12 weist auf der Innenseite eine Werkzeugaufnahme 14 auf. Die Werkzeugaufnahme 14 ist so ausgebildet, dass ein Werkzeug, dass durch die Bedienungsöffnung 7 in den Bohrstutzen 3 eingeführt wird von der Werkzeugaufnahme 14 umschlossen wird. Das Werkzeug kann ein normaler Innensechskantschlüssel oder ein Spezialwerkzeug sein. Mit diesem Werkzeug wird die Schneidbüchse 9 gegenüber dem Bohrstutzen 3 ein- oder ausgeschraubt, wie das bei einem Kernbohrer der Fall ist. Der Antriebsbereich 12 kann auch eine Abschlussplatte 15 aufweisen, mit der verhindert wird, dass das Medium aus der Hauptleitung im Bereich der Bedienungsöffnung 7 fliessen kann. Die Bedienungsöffnung 7 kann zusätzlich verschlossen werden mit einer Schraubkappe oder einen Abschlussdeckel, der in Figur 6 dargestellt ist.

Die Schneidhülse 11 ist aus einem Material hergestellt, das geeignet ist, die Wand des medienfördernden Rohres zu durchtrennen. Für Kunststoffrohre aus Polyäthylen oder Polypropylen genügt eine zylindrische Messinghülse 11 mit einer geschliffenen Schneidkante 16. Nur der Schneidbereich 10 ist aus Metall hergestellt. Die übrigen Bereiche der Schneidbüchse 9 können aus dem gleichen Kunststoffmaterial wie das Gehäuse 2 oder aus einem damit kompatiblen Kunststoffmaterial hergestellt werden. Wenn eine schwerere Ausführung gewünscht wird, kann auch die gesamte Schneidbüchse 9 aus demselben Material, beispielsweise Messing, hergestellt werden. Der Schneidbereich 10 ist so dünnwandig wie möglich ausgebildet und nimmt auf der Innenseite das Kunststoffteil auf, das aus der Wand des medienfördernden Rohres ausgeschnitten wurde. Die Schneidhülse 11 weist auf der Innenseite ein Spezialgewinde 17 auf, das dazu dient, beim Anbohren des Rohres das ausgeschnittene Kunststoffteil in die Schneidhülse 11 aufzunehmen. Mit dem Spezialgewinde 17 wird weiterhin verhindert, dass, beim Ausschrauben das aus dem Rohr ausgeschnittene Kunststoffteil innerhalb der Schneidbüchse 9 in einer Schräglage kippt oder sogar aus der Schneidbüchse 9 in das Rohr zurückfällt.

Der Gewindebereich 13 ist wie die Schneidhülse 11 zylindrisch ausgebildet, jedoch nicht zwingend aus Metall oder Messing. Mit dem Gewindebereich 13 wird die Schneidbüchse 9 drehbar und betätigbar in dem Bohrstutzen 3 angeordnet. Der Gewindebereich 13 der Schneidbüchse 9 weist auf der Aussenseite ein Aussengewinde 18 und auf der Innenseite einen Dichtungsbereich 19 auf. Der Bohrstutzen 3 weist ein Innengewinde 20 auf, der komplementär zum Aussengewinde 18 der Schneidbüchse 9 ausgebildet ist.

In dem Beispiel von Figur 1 und 2 weist der Bohrstutzen 9 eine ringförmige Aufnahmetasche 21 auf, der sowohl der gesamte Dichtungsbereich 19 als auch die komplementären Gewinde 18, 20 grösstenteils aufnimmt. Durch die ringförmige Ausbildung der Aufnahmetasche 21 wird erreicht, dass sowohl der Dichtungsbereich 19 als auch die komplementären Gewinde 18, 20 auf engstem Raum angeordnet werden kann. Hierdurch wird die Bauhöhe der Rohranbohrarmatur 1 so klein wie möglich gehalten.

Der Dichtungsbereich 19 der Schneidbüchse 9 weist eine Ringnut 22 zur Aufnahme eines Dichtungsmittels 23 auf. Das Dichtungsmittel ist beispielsweise eine O-Ringdichtung 23, die in vielen Standardgrössen erhältlich ist. Die Ringnut 22 ist in dem zylindrischen Dichtungsbereich 19 angeordnet, der räumlich getrennt von den komplementären Gewinden 18, 20 an der Schneidbüchse 9 ausgebildet ist. Durch die räumlich getrennte Anordnung des Dichtungsbereiches 19 und der Gewinde 18, 20 wird eine einfache Herstellung und eine materialsparende Dimensionierung der Schneidbüchse möglich. Einerseits können die Wandteile, die Dichtungsfunktionen haben genau für diese Aufgabe ausgelegt werden und andererseits können die Wandteile, die die Gewinde 18, 20 aufweisen, genau für jene Aufgabe ausgelegt werden. In der Herstellung bedeutet dies, dass im Beispiel von Figur 1 und 2 die Innenwand der Schneidbüchse 9 und die näher bei der Mittelachse des Bohrstutzens 3 liegende Wand der Aufnahmetasche 21 möglichst glatt und einförmig ausgebildet werden können. Hierdurch wird eine möglichst gute Dichtwirkung zwischen Bohrstutzen 3 und Schneidbüchse 9 erreicht, so dass die Rohranbohrarmatur 1 auch für hohe Mediendrücke eingesetzt werden kann. Die Ausbildung der ringförmigen Aufnahmetasche 21 des Bohrstutzens 3 mit dem Innengewinde 20 kann vereinfacht werden durch eine Herstellung des Bohrstutzens 3 in zwei Einzelteilen. Durch die Herstellung in Einzelteilen kann die Innenseite der Aufnahmetasche leichter bearbeitet oder verformt werden und anschliessend können die Einzelteile durch Verklebung, Verschweissung oder Verschraubung zu einer ringförmigen Aufnahmetasche 21 zusammengefügt werden. Die Ringnuten 22 und die O-Ringdichtungen 23 können, statt an dem Dichtungsbereich 19 der Schneidbüchse 9, auch an den gegenüberliegenden Wandbereichen des Bohrstutzens 3 des Gehäuses 2 ausgebildet sein.

Das Dichtungsmittel 23 ist auf einem Durchmesser angeordnet, der wesentlich kleiner ist als der Durchmesser der komplementären Gewinde 18, 20. Hierdurch wird die Dichtwirkung der Armatur 1 nochmals verbessert, da mit kleinerem Durchmesser die an dem Dichtungsmittel 23 auftretenden Kräfte geringer werden. In den Figuren 1 und 2 ist ersichtlich, dass der grösste Durchmesser, d.h. der Aussendurchmesser der O-Ringdichtung 23 kleiner ist als der kleinste Durchmesser, d.h. der Innendurchmesser der komplementären Gewinde 18, 20. Weil die komplementäre Gewinde 18, 20 im Vergleich zu der O-Ringdichtung 23 einen verhältnismässig grossen Durchmesser aufweisen, wird auch die Bedienung der Schneidbüchse 9 wesentlich erleichtert. Der Vorschub der Schneidbüchse 9 wird, bei gleichem Steigungswinkel, proportional zum Durchmesser der komplementären Gewinde 18, 20 pro Umdrehung grösser.

In Figur 2 ist die Rohranbohrarmatur 1 von Figur 1 nochmals geschnitten dargestellt, hier jedoch in der Stellung nach dem vollständigen Einschrauben der Schneidbüchse 9 in die Wand des medienfördernden Rohres. In dieser Stellung wurde das Rohr bereits angebohrt und ein Teil der Rohrwand wurde dabei in der Schneidhülse 10 aufgenommen. Ein zu tief gehendes Einschrauben kann durch einen Anschlag verhindert werden. Es ist ersichtlich, wie auch in der eingeschraubten Stellung die Schneidbüchse 9 noch von der Aufnahmetasche 21 des Bohrstutzen 3 geführt und abgedichtet wird. Als nächster Schritt wird, ausgehend von dieser Stellung, die Schneidbüchse 9 wieder ausgeschraubt bis zur Stellung von Figur 1. Das Werkzeug zur Betätigung der Schneidbüchse 9 kann aus der Bedienungsöffnung 7 herausgenommen werden. Als zusätzliche Dichtung und zur Sicherung der Anordnung gegen unerwünschte Zugriffen kann die Bedienungsöffnung 7 mit einer in Figur 6 dargestellten Abschlusskappe oder mit einem Schraubdeckel verschlossen werden.

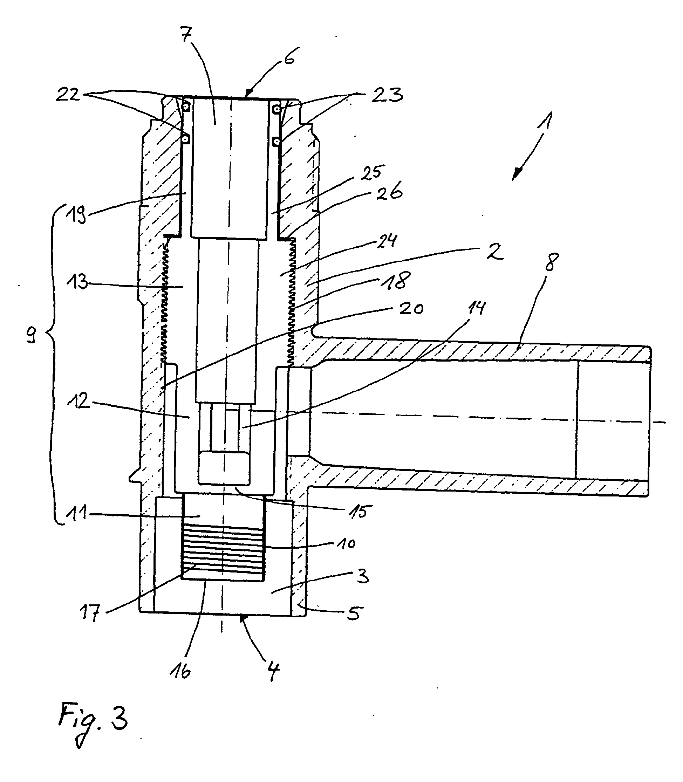

In den Figuren 3 bis 5 ist ein erfindungsgemässes Ausführungsbeispiel der Rohranbohrarmatur 1 dargestellt. Die Schneidbüchse 9 weist eine andere Ausführung als in den Figuren 1 und 2 auf. Der Dichtungsbereich 19 ist auch hier räumlich getrennt von den komplementären Gewinden 18, 20 angeordnet. Die räumliche Trennung ist hier noch ausgeprägter als in den Figuren 1 und 2. Die Schneidbüchse 9 weist hier anschliessend an dem äusseren Gewinde 18, der an einem ersten Wandbereich 24 der Schneidbüchse 9 ausgebildet ist, noch einen zweiten Wandbereich 25 auf, der über einen Absatz 26 mit dem ersten Wandbereich 24 verbunden ist. Das Dichtungsmittel 23 ist an diesem zweiten Wandbereich 25 der Schneidbüchse 9 ausgebildet. Das Dichtungsmittel 23 ist ebenfalls auf einem Kreis angeordnet, mit einem Aussendurchmesser, der kleiner ist als der Innendurchmesser des Dichtungsbereichs 19. Das Ausführungsbeispiel von Figuren 3 bis 5 zeichnet sich aus durch eine gute Führung der Schneidbüchse 9 beim Ein- und Ausschrauben.

Die Dichtwirkung kann weiter erhöht werden durch eine zweite O-Ringdichtung 23 in einer zweiten Ringnut 22 im Dichtungsbereich 19 der Schneidbüchse 9. Bei der richtigen Dimensionierung der Längenverhältnisse des Dichtungsbereiches 19 und der komplementären Gewinde 18, 20 und durch die Anordnung der Ringnuten 22 mit den O-Ringdichtungen 23 in der richtigen Höhe kann die Bauhöhe auf ein Minimum beschränkt werden.

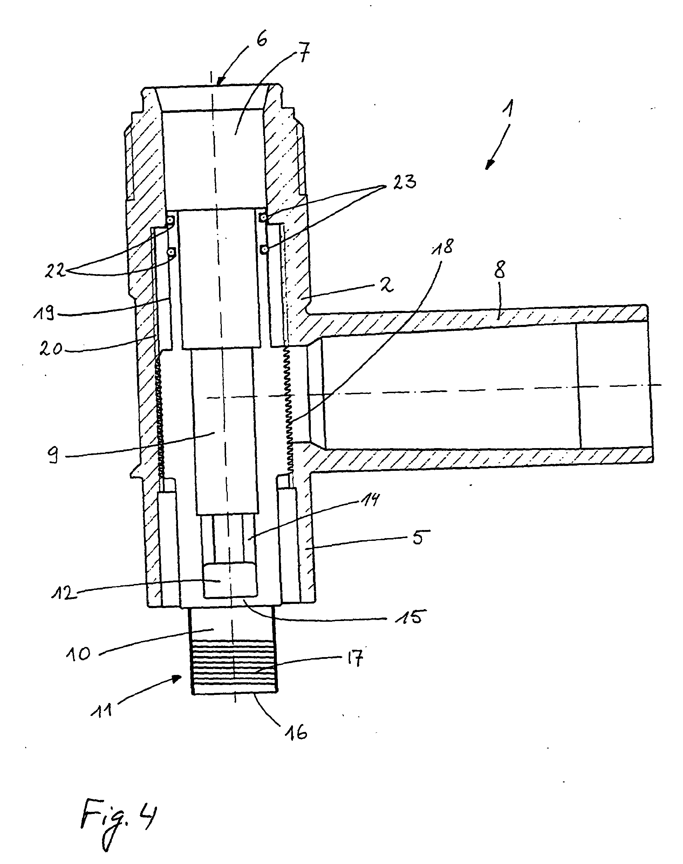

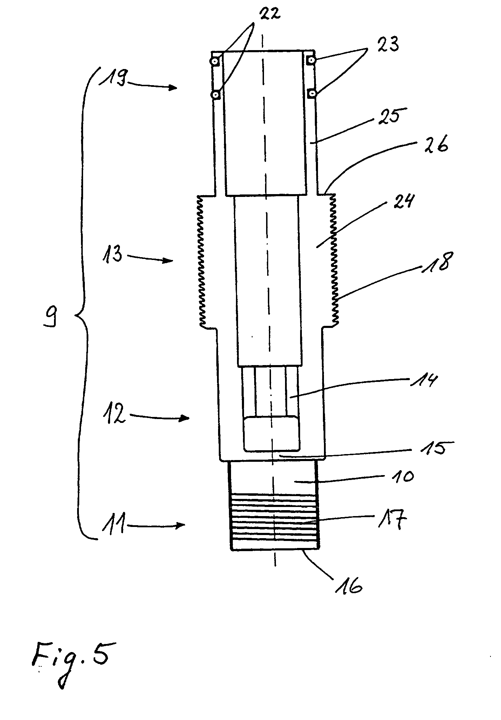

In Figur 5 ist die Schneidbüchse 9 aus Figuren 3 und 4 alleine dargestellt. Hier sind die einzelnen Bereiche der Schneidbüchse 9 deutlich zu erkennen. Von unten nach oben die Schneidhülse 11, der Antriebsbereich 12 mit der Werkzeugaufnahme 14, der Gewindebereich 13 mit dem Aussengewinde und der Dichtungsbereich 19 mit den Ringnuten 22 und den O-Ringdichtungen 23.

In Figur 6 ist ein weiteres Beispiel einer erfindungsgemäßen Rohranbohrarmatur verbunden mit einem medienfördernden Rohr 30 dargestellt. Das Beispiel von Figur 6 ist nicht Teil der Erfindung. In der linken Hälfte von Figur 6 ist die Schneidbüchse 9 in einem Zustand dargestellt, bei der die Schneidbüchse 9 das medienfördernde Rohr 30 vollständig durchtrennt hat. In der rechten Hälfte von Figur 6 ist die Schneidbüchse 9 in einem Zustand dargestellt, bei der die Schneidbüchse 9 den Durchgang von dem medienfördernden Rohr in dem Abzweigstutzen 8 vollständig freigibt. Die Anbohrarmatur 1 von Figur 6 kann auf unterschiedlicher Art mit dem medienfördernden Rohr 30 verbunden werden. In Figur 6 ist dies angedeutet durch eine Verklebung 31, durch eine Elektroschweissverbindung 32 und durch eine Rohrschellenhälfte 33. Die Schneidbüchse 9 wird bei der Herstellung von unten in die Rohranbohrarmatur 1 bis zum Zustand der rechten Hälfte von Figur 6 eingeschraubt. Anschliessend wird ein im Wesentlichen ringförmiges Einsatzteil 34 ebenfalls von unten in den Bohrstutzen 3 eingebracht. Das Einsatzteil 34 kann am unteren Ende des Bohrstutzens 3 eingeklebt, eingeschweisst oder eingeschraubt werden. Mit dem Einsatzteil 34 wird verhindert, dass beim Anbohren des Rohres 30 die Schneidbüchse 9 zu tief in das Rohr 30 eingeschraubt wird. Wenn die Schneidbüchse 9 zu tief in das Rohr 30 eingeschraubt würde, würde am oberen Ende der Schneidbüchse 9 keine Dichtwirkung mehr gewährleistet sein und würde das Medium beim Anbohrvorgang aus dem Rohr 30 entweichen. Ein zu tiefes Einschrauben kann jedoch auch verhindert werden durch eine besondere Ausbildung des Gewindes 18 im unteren Bereich. Das Gewinde 18 kann auslaufend geschnitten werden oder die Länge des Gewindes 18 kann so kurz gewählt werden, dass das hohe Drehmoment, das für den Schneidvorgang nötig ist, nur bis zu einer definierten Position übertragen wird. Hiermit wird erreicht, dass die Schneidbüchse 9 unterhalb dieser definierten Position kein Drehmoment mehr überträgt und sozusagen ins Leere rutscht.

Am oberen Ende des Bohrstutzens 3 im Bereich der Bedienungsöffnung 7 ist ebenfalls eine Schraubkappe 35 oder einen Abschlussdeckel dargestellt. Mit der Schraubkappe 35 wird die Anbohrarmatur 1 nach erfolgtem Anbohrvorgang zusätzlich verschlossen. Die Anbohrarmatur 1 wird überall dort eingesetzt, wo ein Verlust des Mediums unerwünscht ist oder eine Gefahr für die Umwelt bedeuten kann.

## Patentansprüche

1. Rohranbohrarmatur (1) für ein medienförderndes Rohr, umfassend ein Gehäuse (2), das einen unter einem Winkel zur Rohrachse anbringbaren Bohrstutzen (3) zum Anbohren der Rohrwand und
einen unter einem Winkel zum Bohrstutzen (3) angeordneten Abzweigstutzen (8) aufweist, wobei
im Bohrstutzen (3) eine drehbetätigbare Schneidbüchse (9) mit einem Schneidbereich (10, 11), einem Gewindebereich (13, 24) komplementär zum Gewinde (20) des Bohrstutzens (3) und einem Dichtungsbereich (19, 25) zwischen Bohrstutzen (3) und Schneidbüchse (9) mit mindestens einem Dichtungsmittel (23) zur Abdichtung des medienfördernden Rohres gegen Aussen angeordnet ist, wobei zwischen dem Gewindebereich (13, 24) und dem Dichtungsbereich (19, 25) ein Absatz (26) derart ausgebildet ist, dass der Dichtungsbereich (19, 25) einen wesentlich kleineren Durchmesser als der Gewindebereich (13, 24) aufweist,
**dadurch gekennzeichnet,**
**dass** der Dichtungsbereich (19, 25) in axialer Richtung gesehen ferner beabstandet vom Schneidbereich (10, 11) als der Gewindebereich (13, 24) angeordnet ist.

2. Rohranbohrarmatur nach dem Anspruch 1, **dadurch gekennzeichnet, dass** das Dichtungsmittel (23) zwischen dem Bohrstutzen (3) des Gehäuses (2) und der Schneidbüchse (9) in einem einförmigen und vom Gewinde (18) beabstandeten Dichtungsbereich (19) der Schneidbüchse angeordnet ist.

3. Rohranbohrarmatur nach dem Anspruch 1 oder 2, **dadurch gekennzeichnet,**
**dass** der Dichtungsbereich (19) eine Ringnut (22) zur Aufnahme des Dichtungsmittels (23) aufweist.

4. Rohranbohrarmatur nach einem der Ansprüche 1 bis 3, **dadurch gekennzeichnet, dass** der Bohrstutzen (3) einstückig mit dem Gehäuse (2) aus einem Kunststoffmaterial ausgebildet ist.

## Claims

1. Pipe-drilling fitting (1) for a medium-conveying pipe, comprising a housing (2) which has a drilling stub (3), which can be fitted at an angle to the pipe axis, for drilling into the pipe wall, and a branch stub (8) which is arranged at an angle to the drilling stub (3), wherein
a rotationally actuable cutting bush (9) having a cutting region (10, 11), a threaded region (13, 24) complementary to the thread (20) of the drilling stub (3) and a sealing region (19, 25) between drilling stub (3) and cutting bush (9) and having at least one sealing means (23) for sealing the medium-conveying pipe with respect to the outside is arranged in the drilling stub (3), a shoulder (26) is formed between the threaded region (13, 24) and the sealing region (19, 25), in such a manner that the sealing region (19, 25) has a significantly smaller diameter than the threaded region (13, 24),
**characterized**
**in that** the sealing region (19, 25), as seen in the axial direction, is arranged further away from the cutting region (10, 11) than the threaded region (13, 24) is.

2. Pipe-drilling fitting according to Claim 1, **characterized in that** the sealing means (23) between the drilling stub (3) of the housing (2) and the cutting bush (9) is arranged in a uniform sealing region (19), which is at a distance from the screw thread (18), of the cutting bush.

3. Pipe-drilling fitting according to Claim 1 or 2, **characterized in that** the sealing region (19) has an annular groove (22) for accommodating the sealing means (23) .

4. Pipe-drilling fitting according to one of Claims 1 to 3, **characterized in that** the drilling stub (3) is formed integrally with the housing (2) from a plastics material.

## Revendications

1. Appareil de perçage de tube (1) pour un tube transportant des fluides, comprenant :
un boîtier (2) qui présente une tubulure de perçage (3) pouvant être montée suivant un certain angle par rapport à l'axe du tube, pour le perçage de la paroi du tube et
une tubulure de dérivation (8) disposée suivant un certain angle par rapport à la tubulure de perçage (3),
une douille de découpage (9) pouvant être commandée en rotation étant disposée dans la tubulure de perçage (3), avec une région de découpage (10, 11), une région filetée (13, 24) complémentaire au filetage (20) de la tubulure de perçage (3) et une région d'étanchéité (19, 25) entre la tubulure de perçage (3) et la douille de découpage (9), avec au moins un moyen d'étanchéité (23) pour réaliser l'étanchéité du tube de transportant des fluides par rapport à l'extérieur,
un épaulement (26) étant réalisé entre la région filetée (13, 24) et la région d'étanchéité (19, 25) de telle sorte que la région d'étanchéité (19, 25) présente un diamètre sensiblement plus petit que la région filetée (13, 24),
**caractérisé en ce que**
la région d'étanchéité (19, 25), vue dans la direction axiale, est plus éloignée de la région de découpage (10, 11) que la région filetée (13, 24) .

2. Appareil de perçage de tube selon la revendication 1, **caractérisé en ce que** le moyen d'étanchéité (23) est disposé entre la tubulure de perçage (3) du boîtier (2) et la douille de découpage (9) dans une région d'étanchéité (19) de la douille de découpage uniforme et espacée du filetage (18).

3. Appareil de perçage de tube selon la revendication 1 ou 2, **caractérisé en ce que** la région d'étanchéité (19) présente une rainure annulaire (22) pour recevoir le moyen d'étanchéité (23).

4. Appareil de perçage de tube selon l'une quelconque des revendications 1 à 3, **caractérisé en ce que** la tubulure de perçage (3) est réalisée d'une seule pièce avec le boîtier (2) en un matériau en plastique.
